# EUROPÄISCHE PATENTSCHRIFT

(11) **EP 0 656 224 B1**
(45) Veröffentlichungstag und Bekanntmachung des Hinweises auf die Patenterteilung: **08.10.1997**
(21) Anmeldenummer: 94107709.1
(22) Anmeldetag: 18.05.1994
(51) Int. Cl.: B01D 39/08, B01D 39/18, A47J 31/08

(54) **Filtermaterial**
Filter material
Matière filtrante

(30) Priorität: 01.12.1993 DE 9318405 U
(43) Veröffentlichungstag der Anmeldung: 07.06.1995
(73) Patentinhaber: PAPCEL - PAPIER UND CELLULOSE, TECHNOLOGIE UND HANDELS-GmbH, D-76584 Gernsbach (DE)
(72) Erfinder: Heinrich, Günter, Dipl.-Phys., D-76593 Gernsbach (DE); Köchel, Roland, Dipl.-Ing., D-76287 Rheinstetten (DE)
(74) Vertreter: Henkel, Feiler, Hänzel & Partner

(56) Entgegenhaltungen:
- EP-A- 0 338 479
- EP-A- 0 564 799
- DE-A- 3 005 793
- FR-A- 2 449 159
- US-A- 4 976 858
- US-A- 5 081 819

## Beschreibung

Die Erfindung betrifft ein Filtermaterial für Tee- oder Kaffeefilter oder -beutel sowie aus diesem Filtermaterial hergestellte Tee- oder Kaffeefilter oder -beutel. Das Filtermaterial besteht aus einem zumindest zweilagigen Vliesstoff, wobei zumindest eine auf einer Papiermaschine hergestellte Lage aus natürlichen Fasern und eine Lage aus synthetischen Fasern besteht, die flächig ausgebildet und übereinander angeordnet sind.

Filtermaterialien, die vorzugsweise als Filterpapiere für die Herstellung von beispielsweise Teebeuteln, Kaffeebeuteln, oder Kaffeefiltern verwendet werden, sind hinlänglich bekannt. Diese Filtermaterialien bestehen aus einer Lage natürlicher Fasern, die flächig ausgebildet ist und mit einer ebenfalls flächig ausgebildeten, heißsiegelfähigen Kunststoffschicht belegt ist. Die Herstellung derartiger Filtermaterialien erfolgt in der Art, daß auf einer Papiermaschine in einem ersten Stoffauflauf eine Grundschicht aus überwiegend natürlichen Fasern gebildet und mit Hilfe von Vakuumkammern teilweise entwässert wird. Anschließend wird eine zweite Schicht, die aus heißsiegelfähigen synthetischen Fasern besteht auf der voranstehend genannten Grundschicht abgelegt. Diese zweite Schicht wird anschließend durch die erste Schicht hindurch entwässert, wodurch hautpsächlich geradlinige Kanäle beziehungsweise Poren erzeugt werden, welche beide Schichten durchdringen.

Die aus den vorstehend beschriebenen Filtermaterialien hergestellte Produkte wie zum Beispiel Tee- oder Kaffeebeutel sollen möglichst geringe Partikelmengen, beispielsweise Tee- oder Kaffeepartikeln passieren lassen und anderseits ein schnelles Diffundieren von heißem Wasser durch das Filtermaterial ermöglichen, so daß beispielsweise in kurzer Zeit ein aromatisches farbkräftiges Getränk, wie Tee oder Kaffee, fertigstellbar ist. Demzufolge müssen derartige Filtermaterialien entsprechend porös sein, wobei im Stand der Technik ein Kompromiß zwischen einem Filtermaterial mit möglichst geringem Partikelausfall und einem Filtermaterial mit schneller Flüssigkeitsdiffusion notwendig ist. Die hindurchlaufenden, geradlinigen Poren des voranstehend beschriebenen Filtermaterials stellen zwar eine schnelle Diffusion des Wassers oder einer anderen Flüssigkeit sicher, sind jedoch hinsichtlich des Partikelausfalls, insbesondere bei der Tee- oder Kaffeezubereitung nachteilig, da durch die hindurchlaufenden, geradlinigen Poren eine entsprechend große Menge Partikel durch das Filtermaterial hindurchtreten kann.

Aus der US-A-4976858 ist ein Filtermaterial zur Verwendung in Öl- oder Luftfiltern für Verbrennungsmotoren bekannt geworden, das aus einer zweilagigen Kombination eines Filterpapiers mit einem Synthesevlies besteht. Beide Lagen sind übereinander angeordnet und thermisch miteinander verschmolzen.
Ein weiteres zweilagiges Filtermaterial für Staubbeutel für Staubsauger, zur Tonerabsaugung in Kopiergeräten und zur Verwendung in Filteranlagen der Reinraumtechnik ist in der EP-0338479 A1 beschrieben und weist eine Filterpapieraußenlage sowie ein direkt darauf abgelegtes Feinfaservlies auf, wobei die Feinfasern im thermoplastischen Zustand mit dem Filterpapier verbunden werden.

Es ist die Aufgabe der vorliegenden Erfindung, ein Filtermaterial für Tee- oder Kaffeefilter oder -beutel bereitzustellen, das insbesondere hinsichtlich seines Flüssigkeitsdurchlaß- und seines Feststoffrückhaltevermögens gegenüber Extrakten wie Kaffee, Tee oder dergleichen verbessert ist.

Zur Lösung dieser Aufgabe wird erfindungsgemäß ein Filtermaterial für Tee- oder Kaffeefilter oder -beutel in Vorschlag gebracht, bestehend aus einem zumindest zweilagigen Vliesstoff, wobei zumindest eine auf einer Papiermaschine hergestellte erste Lage aus natürlichen Fasern und eine zweite Lage aus synthetischen Fasern besteht, die flächig ausgebildet und übereinander angeordnet sind, wobei die erste Lage ein Flächengewicht von 8 bis 40 g/m² und eine Luftdurchlässigkeit (DIN 53887) von 300 bis 4000 l/m² sec. aufweist und wobei die zweite Lage eine Vielzahl von einzelnen Kunststofffasern aufweist, die im Melt-Blown-Verfahren im erwärmten Zustand auf die erste Lage aufgebracht sind und sowohl miteinander als auch mit den Fasern der ersten Lage verschmolzen sind.

Außerdem wird ein Tee- oder Kaffeefilter oder -beutel in Vorschlag gebracht, der aus dem erfindungsgemäßen Filtermaterial hergestellt ist.

Ein nach dieser Lehre ausgebildetes Filtermaterial hat insbesondere den Vorteil, daß durch die Auflage der einzelnen Kunststoffasern auf eine Lage aus natürlichen Fasern eine große Anzahl der Poren bzw. Kanäle der Lage aus natürlichen Fasern abgedeckt bzw. verschlossen ist. Nur in einem geringen Prozentsatz liegen die Poren der Lage aus synthetischen Fasern derart über den Poren der Lage aus natürlichen Fasern, daß ein Durchtritt von Partikeln möglich ist. Das erfindungsgemäße Filtermaterial weist somit einen äußerst geringen Partikelausfall auf, da nur eine geringe Zahl an durchgehenden Poren vorhanden ist, wobei im wesentlichen durch die Anordnung von einzelnen Kunststoffasern auf der Lage aus natürlichen Fasern, die darüberhinaus mit dieser Lage verschmolzen sind, ein in sich verschlungenes und verschlossenes Filtermaterial geschaffen wird. Die verschlossenen bzw. verschlungenen Poren in dem zweilagigen Filtermaterial bilden zwar ein Hindernis für die Extraktpartikel, beispielsweise die Tee- oder Kaffeepartikel, sind jedoch kein Hindernis für heißes Wasser oder eine andere Flüssigkeit, welche durch die versetzten und verschlungenen Poren diffundieren kann.

Ein weiterer Vorteil der Erfindung ist darin zu sehen, daß die Lage aus natürlichen Fasern weiterhin in an sich bekannter Weise auf einer Papiermaschine herstellbar ist. Ein auf einer Papiermaschine hergestelltes Vlies hat eine hohe Luftdurchlässigkeit aufgrund einer großen Anzahl entstandener Poren. Im weiteren Verfahrensablauf wird dann das Kunststoffgranulat in einem Extruder aufgeschmolzen und durch eine hohe Anzahl von sehr feinen Düsen gepresst. Die dadurch entstandenen feinen Fasern werden durch einen heißen Luftstrom verwirbelt und zerrissen. Diese noch klebenden heißen Kunststoffasern werden dann auf die unter dem Extruder hindurchlaufende erste Lage aus natürlichen Fasern abgelegt. Hier verschmelzen diese Fasern untereinander und mit den natürlichen Fasern der ersten Lage. Die als Filamente zu bezeichnenden Kunststoffasern haben in der Regel einen Durchmesser von 0,3 - 10,0 µm, vorzugsweise von 0,5 - 3,0 µm, und vereinigen sich auf der ersten Lage zu einem Vlies aus Kunststoff, wobei zwischen den Filamenten Poren entstehen.

Es hat sich als besonders vorteilhaft bei einem erfindungsgemäßen Filtermaterial erwiesen, wenn die erste Lage ein Flächengewicht von 8 bis 40 g/m², vorzugsweise von 14 g/m² oder vorzugsweise von 12 g/m², und eine Luftdurchlässigkeit von 300 - 4.000 l/m² sec, vorzugsweise von 1600 l/m² sec oder vorzugsweise von 2000 l/m² sec., hat. Darüberhinaus werden gute Filterergebnisse dann erzielt, wenn die zweite Lage des Filtermaterials ein Flächengewicht zwischen 1,0 und 15 g/m², vorzugsweise 2,5 g/m² oder vorzugsweise 5 g/m², aufweist.

Ein besonders vorteilhaftes Filtermaterial wird somit dadurch gebildet, daß das Filtermaterial ein Flächengewicht bezogen auf beide Lagen von etwa 16,5 g/m² oder von etwa 17 g/m² hat. Bei einer Messung auf einer definierten Rütteleinrichtung mit festgelegtem Hub und Frequenz und zwei Minuten Schütteldauer wurde festgestellt, daß weniger als 0,5 % Partikel mit einer Größenverteilung zwischen 110 und 150 µm durch das Filtermaterial penetrieren bzw. diffundieren. Im Vergleich dazu penetrieren bzw. diffundieren bei einem Filtermaterial gemäß dem Stand der Technik bei gleichem Flächengewicht 10 bis 20% der Partikel bei gleicher Meßmethode durch das Filtermaterial.

Das erfindungsgemäße Filtermaterial weist insbesondere dann die vorstehend genannten Vorteile auf, wenn die zweite Lage aus synthetischen Fasern im Melt-Blown-Verfahren hergestellt ist. Darüberhinaus hat ein Filtermaterial mit einer im Melt-Blown-Verfahren hergestellten zweiten Lage aus synthetischen Fasern den Vorteil, daß bei der Herstellung von heißversiegelten Tee- oder Kaffeebeuteln die heißsiegelfähigen Seiten gegeneinander auf der Abpackmaschine versiegelt werden. Das bedeutet, daß der gesamte Kunststoffanteil zum Siegeln zur Verfügung steht und eine hohe Siegelnahtfestigkeit im trockenen sowie auch im nassen Zustand ergibt. Bei den herkömmlichen (zum Stande der Technik gehörenden heißsiegelfähigen) Tee- oder Kaffeebeutelpapieren steht der Heißversiegelung dagegen nur ein kleinerer Teil der Kunststoffaser zur Verfügung, da durch den Herstellungsprozess auf der Papiermaschine ein Teil der synthetischen Fasern in die Papierlage hineingezogen wird.

Ein überaus vorteilhaftes Filterergebnis wird dadurch erzielt, daß die erste Lage des erfindungsgemäßen Filtermaterials im wesentlichen aus einer Mischung aus Nadelholz- und Laubholzzellstoffen, sowie Manila- oder Manila-ähnlichen Fasern und Zellulose-Regeneratfasern besteht. Hierbei ist es ferner von Vorteil, wenn die erste Lage naßfest ausgebildet ist. Für die zweite Lage wird vorzugsweise ein Thermoplast verwendet, wobei vorzugsweise Polypropylen- oder Polyethylenfasern Verwendung finden.

Weitere Vorteile und Merkmale der Erfindung ergeben sich aus der nachfolgenden Beschreibung der zugehörigen Zeichnung. In der Zeichnung zeigen:
- Figur 1: eine geschnitten dargestellte Seitenansicht eines Abschnittes eines erfindungsgemäßen Filtermaterials und
- Figur 2: eine geschnitten dargestellte Seitenansicht eines Abschnittes eines Filtermaterials gemäß dem Stand der Technik.

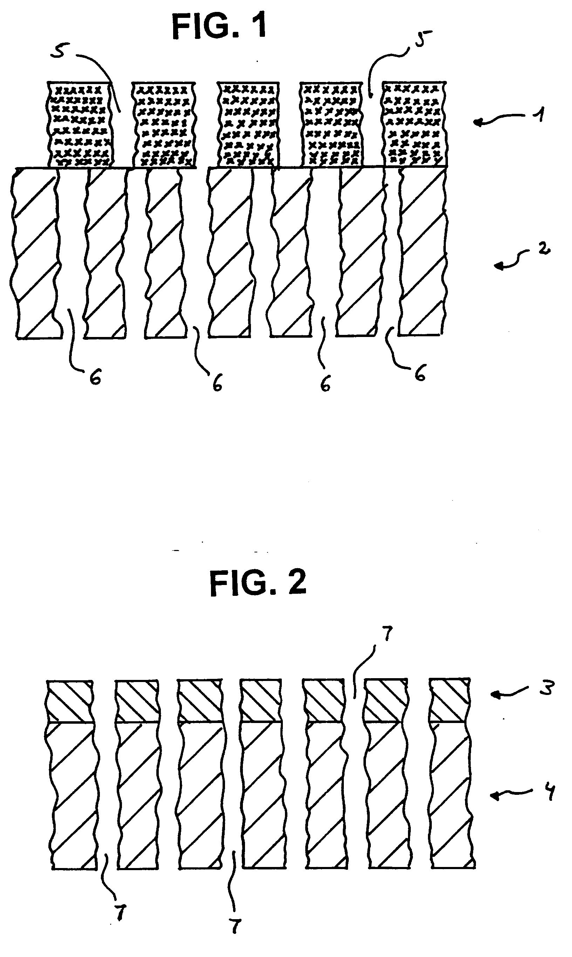

Die in den Figuren 1 und 2 dargestellten Filtermaterialien bestehen aus zwei übereinander angeordneten Lagen 1 und 2 bzw. 3 und 4 flächiger Ausbildung. Die hierbei untere Lage 2 (Fig. 1) besteht aus natürlichen Fasern, wobei eine Mischung aus Nadelholz- und Laubholzzellstoffen, Manila sowie Manila-ähnlichen Fasern und Zellulose-Regeneratfasern verwendet ist. Die Lage 2 weist ein Flächengewicht vonvorzugseise 14 g/m² bzw. in einer weiteren Ausführungsform von vorzugsweise 12 g/m² und eine Luftdurchlässigkeit von vorzugsweise 1600 l/m² sec. bzw. in einer weiteren Ausführungsform von vorzugsweise 2000 l/m² sec. auf.

Über den Lagen 2 und 4 ist eine zweite Lage 1 bzw. 3 aus synthetischen Fasern angeordnet, wobei die Lage 1 (Fig. 1) aus Polypropylen- oder Polyethylen-Fasern besteht, die im Melt-Blown-Verfahren auf die untere Lage 2 aufgebracht sind. Das Flächengewicht der Lage 1 beträgt vorzugsweise 2,5 g/m² bzw. in einer weiteren Ausführungsform vorzugsweise 5 g/m², so daß sich ein Gesamtflächengewicht des Filtermaterials, bestehend aus der Lage 1 und der Lage 2 von 16,5 g/m² bzw. von 17 g/m² ergibt.

Wie insbesondere aus der Figur 1 zu erkennen ist, weist das Filtermaterial Poren 5 zwischen einzelnen Kunststoffasern in der oberen Lage 1 auf. Darüberhinaus sind auch in der unteren Lage 2 eine Vielzahl von Poren 6 vorhanden. Hierbei ist erkennbar, daß die Poren 5 derart angeordnet sind, daß sie zu einem großen Teil nicht über den Poren 6 angeordnet sind, so daß ein Großteil der Poren 5 auf der Oberfläche der zweiten Lage 2 und ein Großteil der Poren 6 an der Unterfläche der Lage 1 enden.

Im Vergleich dazu weist ein Filtermaterial nach dem Stand der Technik gemäß Figur 2 Poren 7 auf, die im wesentlichen als geradlinige Kanäle ausgebildet sind und sowohl die obere Lage 3 aus synthetischen Fasern als auch die untere Lage 4 aus natürlichen Fasern durchdringen. Die Poren 7 stellen somit eine direkte Verbindung zwischen der Oberseite der Lage 3 und der Unterseite der Lage 4 dar, durch welche Extraktpartikel, wie beispielsweise Kaffee- oder Teepartikel diffundieren können.

Das in der Figur 1 dargestellte Filtermaterial weist eine Siegelnahtfestigkeit von 2,0 N/15 mm Streifenbreite auf, wogegen das in Figur 2 dargestellte Filtermaterial lediglich eine Siegelnahtfestigkeit von 1,2 - 1,4 N/15 mm Streifenbreite hat. Die Versiegelung der 15 mm breiten Streifen erfolgte vor Messung der Siegelnahtfestigkeit bei einer Temperatur von 210° C und einem Druck von 3 bar über einen Zeitraum von 0,5 sec.

## Patentansprüche

1. Filtermaterial für Tee- oder Kaffeefilter oder -beutel, bestehend aus einem zumindest zweilagigen Vliesstoff,
wobei zumindest eine auf einer Papiermaschine hergestellte erste Lage (2) aus natürlichen Fasern und eine zweite Lage (1) aus synthetischen Fasern besteht, die flächig ausgebildet und übereinander angeordnet sind,
wobei die erste Lage (2) ein Flächengewicht von 8 bis 40 g/m² und eine Luftdurchlässigkeit von 300 bis 4000 l/m² sec. aufweist und
wobei die zweite Lage (1) eine Vielzahl von einzelnen Kunststoffasern aufweist, die im Melt-Blown-Verfahren im erwärmten Zustand auf die erste Lage (2) aufgebracht sind und sowohl miteinander als auch mit den Fasern der ersten Lage (2) verschmolzen sind.

2. Filtermaterial nach Anspruch 1, wobei die erste Lage (2) ein Flächengewicht von 12 g/m² und eine Luftdurchlässigkeit von 2000 l/m² sec. aufweist.

3. Filtermaterial nach Anspruch 1, wobei die erste Lage (2) ein Flächengewicht von 14 g/m² und eine Luftdurchlässigkeit von 1600 l/m² sec. aufweist.

4. Filtermaterial nach einem der vorstehenden Ansprüche, wobei die zweite Lage (1) ein Flächengewicht zwischen 1,0 und 15 g/m² aufweist.

5. Filtermaterial nach Anspruch 4, wobei die zweite Lage (1) ein Flächengewicht von 5 g/m² aufweist.

6. Filtermaterial nach Anspruch 4, wobei die zweite Lage (1) ein Flächengewicht von 2,5 g/m² aufweist.

7. Filtermaterial nach einem oder mehreren der vorstehenden Ansprüche, wobei die erste Lage (2) im wesentlichen eine Mischung aus Nadelholz- und Laubholzzellstoffen, Manila sowie Manila-ähnlichen Fasern und Zellulose-Regenerat-Fasern umfaßt.

8. Filtermaterial nach einem oder mehreren der vorstehenden Ansprüche, wobei die erste Lage (2) naßfest ausgebildet ist.

9. Filtermaterial nach einem oder mehreren der vorstehenden Ansprüche, wobei die zweite Lage (1) aus einem Thermoplasten, vorzugsweise aus Polypropylen- oder Polyethylen-Fasern besteht.

10. Filtermaterial nach einem oder mehreren der vorstehenden Ansprüche, wobei zumindest zwei aus zweilagigem Vliessstoff bestehende Filterpapiere aufeinanderliegend angeordnet und in Teilbereichen durch Heißversiegelung miteinander verbunden sind.

11. Verwendung von Filtermaterial nach einem oder mehreren der vorstehenden Ansprüche zur Herstellung von Teebeuteln, Teefiltern, Kaffeebeuteln oder Kaffeefiltern.

12. Tee- oder Kaffebeutel oder -filter, hergestellt aus einem Filtermaterial gemäß einem der Ansprüche 1 bis 10.

## Claims

1. Filter material for tea or coffee filters or bags consisting of an at least two-ply (layer) non-woven fabric,
wherein at least a first layer, produced on a paper machine, consists of natural fibres and a second layer consists of synthetic fibres, which layers are flat and disposed one on top of the other,
wherein the first layer (2) has a surface weight of 8 to 40 g/m² and air permeability of 300 to 4000 l/m² sec., and
wherein the second layer (1) comprises a multiplicity of individual synthetic fibres which are applied in the melt-blown process in a heated state to the first layer (2) and are fused both to each other and to the fibres of the first layer (2).

2. Filter material according to claim 1, wherein the first layer (2) preferably has a surface weight of 12 g/m² and air permeability of 2000 l/m² sec.

3. Filter material according to claim 1, wherein the first layer (2) preferably has a surface weight of 14 g/m² and air permeability of 1600 l/m² sec.

4. Filter material according to one of the preceding claims, wherein the second layer (1) has a surface weight between 1.0 and 15 g/m².

5. Filter material according to claim 4, wherein the second layer (1) has a surface weight of 5 g/m².

6. Filter material according to claim 4, wherein the second layer (1) has a surface weight of 2.5 g/m².

7. Filter material according to one of more of the preceding claims, wherein the first layer (2) substantially comprises a mixture of coniferous wood cellular material and deciduous wood cellular material, manila and manila-like fibres and cellulose regenerate fibres.

8. Filter material according to one or more of the preceding claims, wherein the first layer (2) is formed to be strong when wet.

9. Filter material according to one or more of the preceding claims, wherein the second layer (1) consists of a thermoplastic, preferably of polypropylene fibres or polyethylene fibres.

10. Filter material according to one or more of the preceding claims, wherein at least two filter papers consisting of two-ply (layer) non-woven fabric are disposed on one another and are connected to each other in partial regions by heat sealing.

11. Use of filter material according to one or more of the preceding claims for production of tea bags, coffee bags, tea filters or coffee filters.

12. Tea or coffee bags or filters, made from a filter material according to one of the claims 1 to 10.

## Revendications

1. Matière filtrante pour filtres à thé ou à café ou sachets de thé ou de café constituée par une nappe fibreuse en au moins deux couches, dont au moins une première couche est en fibres naturelles réalisée sur une machine à papier et une deuxième couche est en fibres synthétiques, ces deux couches étant planes et superposées,
dont la première couche (2) présente par unité de surface un poids de 8 à 40 g/m² et une perméabilité à l'air de 300 à 4.000 l/m² s,
dont la deuxième couche (1) comporte un grand nombre de fibres séparées de matière synthétique, qui par un procédé de fusion soufflage (Melt Blown) sont déposées à chaud sur la première couche (2) en fibres naturelles, et se trouvent ainsi fondues ensemble et aussi fondues avec les fibres de la première couche (2).

2. Matière filtrante selon la revendication 1, dont la première couche (2) présente de préference par unité de surface un poids de 12 g/m², et une perméabilité à l'air de 2.000 l / m² s.

3. Matière filtrante selon la revendication 1, dont la première couche (2) présente de préference par unité de surface un poids de 14 g/m², et une perméabilité à l'air de 1 600 l/m² s.

4. Matière filtrante selon l'une des revendications précédentes, dont la deuxième couche (1) présente par unité de surface un poids compris entre 1,0 et 15 g/m².

5. Matière filtrante selon la revendication 4, dont la deuxième couche (1) présente par unité de surface un poids de 5 g/m².

6. Matière filtrante selon la revendication 4, dont la deuxième couche (1) présente par unité de surface un poids de 2,5 g/m².

7. Matière filtrante selon l'une ou plusieurs des revendications précédentes, dont la première couche (2) est constituée essentiellement par un mélange de pâtes de bois résineux et de bois feuillus, de fibres d'abaca et analogues, et de fibres de cellulose régénérée.

8. Matière filtrante selon l'une au plusieurs des revendications prédédentes, dont la première couche (2) est résistante à l'état humide.

9. Matière filtrante selon l'une ou plusieurs des revendications précédentes, dont la deuxième couche (1) est à base d'une matière thermoplastique, et de préférence constituée de fibres en polypropylène ou en polyéthylène.

10. Matière filtante selon l'une ou plusieurs des revendications précédentes, dont au moins deux papiers filtrants constitués par des nappes fibreuses à deux couches sont disposés l'un sur l'autre et fixés l'un à l'autre de place en place par des points de scellement à chaud.

11. Utilisation d'une matière filtrante selon l'une ou plusieurs des revendications précédentes, pour réaliser des sachets de thé, des sachets de café ou des filtres à café.

12. Sachets de thé ou de café ou filtres à thé ou à café fait d'une matière filtrante selon une des revendications 1 à 10.
